# EUROPEAN PATENT SPECIFICATION

(11) **EP 4 274 932 B1**
(45) Date of publication and mention of the grant of the patent: **04.03.2026**
(21) Application number: 22737120.0
(22) Date of filing: 06.01.2022
(51) Int. Cl.: E01F 15/14, E01F 15/04

(54) **TRANSITIONS FOR JOINING CRASH IMPACT ATTENUATOR SYSTEMS TO FIXED STRUCTURES**
ÜBERGÄNGE ZUM VERBINDEN VON AUFPRALLDÄMPFUNGSSYSTEMEN MIT FESTEN STRUKTUREN
TRANSITIONS POUR ASSEMBLER DES SYSTÈMES D'ATTÉNUATEUR D'IMPACT DE COLLISION À DES STRUCTURES FIXES

(30) Priority: 08.01.2021 US 202163135413 P
(43) Date of publication of application: 15.11.2023
(73) Proprietor: Traffix Devices, Inc., San Clemente, CA 92673 (US); Nutech Ventures, Lincoln, NE 68508 (US)
(72) Inventor: MAUS, Geoffrey B., San Clemente, California 92673 (US); ALMANZA, Felipe, San Clemente, California 92673 (US); RAMIREZ, Robert, San Clemente, California 92673 (US); FALLER, Ronald Keith, Lincoln, NE 68508 (US); BIELENBERG, Robert W., Lincoln, NE 68508 (US); ROSENBAUGH, Scott Kenneth, Lincoln, NE 68508 (US)
(74) Representative: Avidity IP
(86) International application number: PCT/US2022/011483
(87) International publication number: WO 2022/150505

(56) References cited:
- CN-U- 210 529 569
- DE-U1- 202013 004 918
- KR-A- 20190 074 119
- KR-A- 20190 074 119
- KR-B1- 101 854 761
- US-A1- 2005 077 508
- US-A1- 2006 054 876
- US-A1- 2006 200 966
- US-A1- 2007 215 849
- US-B2- 7 086 805

## Description

### Background of the Invention

The present invention relates generally to crash impact attenuators, and more particularly to motor vehicle and highway barrier crash impact attenuators comprising fixed systems protecting leading edges of abutments and other fixed roadside hazards. Most particularly, this invention is concerned with transition hardware for joining the crash impact attenuators to the abutments and other fixed roadway hazards.

Vehicular accidents on the highway are a major worldwide problem and are undoubtedly one of the largest causes of economic and human loss and suffering inflicted on the developed world today. In an effort to alleviate, in particular, the human toll of these tragic accidents, guardrails, crash cushions, truck-mounted crash attenuators, crash barrels, and the like have been developed to attenuate the impact of the vehicle with a rigid immovable obstacle, such as a bridge abutment.

A crash attenuator of the type described must absorb the vehicle impact energy without exceeding limits on the vehicle deceleration. In addition, it must accommodate both heavy and light weight vehicles. The lightest vehicle will set the limit on the maximum force produced by the attenuator and the heavy vehicle - which will experience a lower deceleration, and thus will determine the total impact deformation required. When impacted head-on, crash attenuators/cushions are designed to absorb energy and to gradually slow the vehicle to a controlled stop. The force cannot exceed the light vehicle limit and therefore the initial force and deceleration is low, limiting the energy absorption. Increasing crash resistance as the vehicle "rides down" from its impact speed to zero is a vitally important feature of a crash attenuator system which meets rigid governmental safety standards. When impacted obliquely on its side, crash cushions are designed to redirect the vehicle back toward the roadway and to prevent severe impact with the rigid point hazard. Typical crash cushions incorporate side rails/panels, intermediate diaphragms, a track to anchor and guide the intermediate diaphragms, and energy absorbers. As crash safety standards have evolved to higher and higher requirements in order to better protect vehicle occupants from injury, it has become clear that new generation crash impact attenuators, or crash cushions, are required to perform this function and meet these high standards in innovative, inexpensive, and very simple, but effective, manners. KR101854761B1 , KR1020190074119A and DE202013004918U1 each describe transition systems for roadside safety systems.

An important element of an effective crash attenuation system is the transition, or structural connection, between the crash attenuator and the rigid structure behind it, and which it is designed to protect. The present invention is directed to a unique and improve transition structure for securing a crash attenuator to a fixed structure.

### Summary of the Invention

The present invention provides an improved crash attenuation system, particularly with respect to a significantly improved transition system for securing a crash attenuator to a fixed structure which it is positioned to protect, such as a concrete barrier known in the industry as a "Jersey Barrier". The invention is as described in the appended claims.

More particularly, in one aspect of the invention, there is provided a transition system adapted for securing a roadside safety system to a fixed structure, wherein the transition system comprises a plate having a forward end and a rearward end, as well as a front face and a rear face. The transition system further includes a transition mount adapted to secure a rearward end of the roadside safety system to the forward end of the plate, the plate comprising a flat surface which is configured to be conformed to a corresponding surface on the fixed structure.

In exemplary embodiments, the system includes a plurality of apertures disposed through the front and rear faces of the plate at its rearward end, the plurality of apertures being adapted to receive mechanical fasteners for securing the plate to the corresponding surface on the fixed structure.

The plate includes a taper from a location partially along a length of the plate and extending at an angle rearwardly to the rearward end of the plate. This location, in the illustrated embodiment, is about midway along a distance between the forward end of the plate and the rearward end of the plate.

The plate comprises a first width at its forward end and a second width at its rearward end, the second width being smaller than the first width. The width of the plate narrows gradually from the first width at the location partially along the length of the plate to the second width at the rearward end of the plate because of the taper. In the illustrated embodiment, the corresponding surface on the fixed structure is also flat, so that the plate flat surface is adapted to lie in a flush manner on the corresponding flat surface on the fixed structure.

The second width at the rearward end of the plate is adapted to correspond in size to a width of the corresponding flat surface on the fixed structure. The taper angle is adapted to the length of the transition plate and to a size of the corresponding flat surface on the fixed structure. The size of the corresponding flat surface on the fixed structure is one or more of its length, width, or area.

The transition mount is secured to the forward end of the plate by either mechanical fasteners or by one or more welds.

In another aspect of the invention, the transition system is provided with a plurality of reinforcement ribs which are disposed in spaced relation to one another on the rear face of the plate.

Each one of the plurality of reinforcement ribs is disposed along the length of the plate, and each of the plurality of reinforcement ribs has its own length. The lengths of at least two of the plurality of reinforcement ribs are different from one another, permitting the ribs to be customized to the length and configuration of the plate, particularly taking the taper of the plate into account. Advantageously, each of the plurality of reinforcement ribs is comprised of a C-channel construction.

### Brief Description of the Drawings

Fig. 1 is an isometric view of an exemplary embodiment of a crash attenuator and transition structure constructed in accordance with the principles of the present invention, taken from a forward perspective, looking rearward;
Fig. 2 is an isometric view similar to Fig. 1, taken from a rearward perspective, looking forward;
Fig. 3 is an isometric view of an exemplary embodiment of the transition structure of the present invention;
Fig. 4 is a plan view of the transition structure of Fig. 3;
Fig. 5 is a top view of the transition structure of Figs. 3 and 4; and
Fig. 6 is a plan view of the rear or back face of the transition structure of Figs. 3-5.

### Detailed Description of the Invention

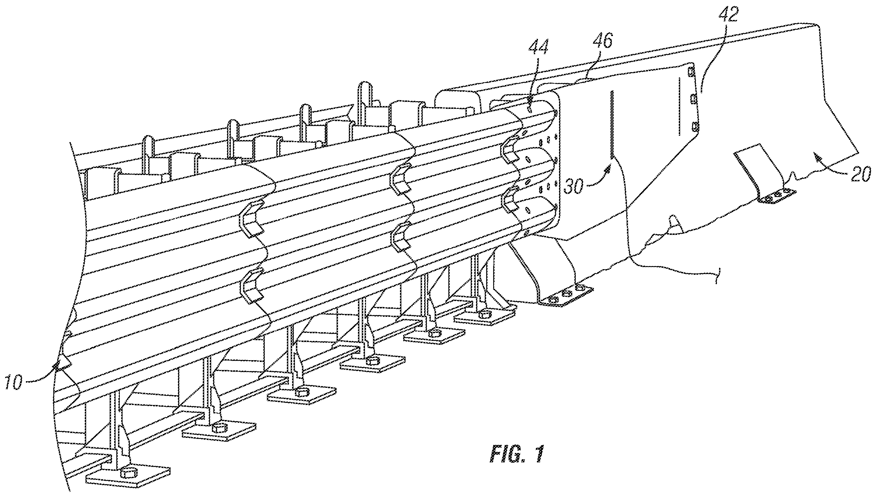

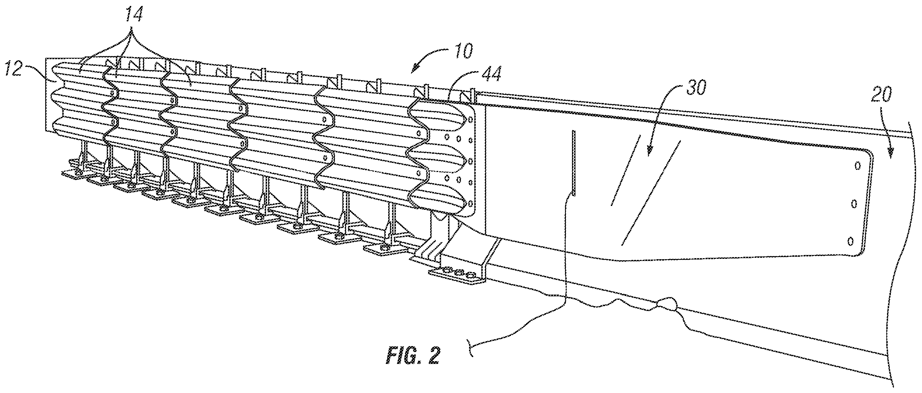

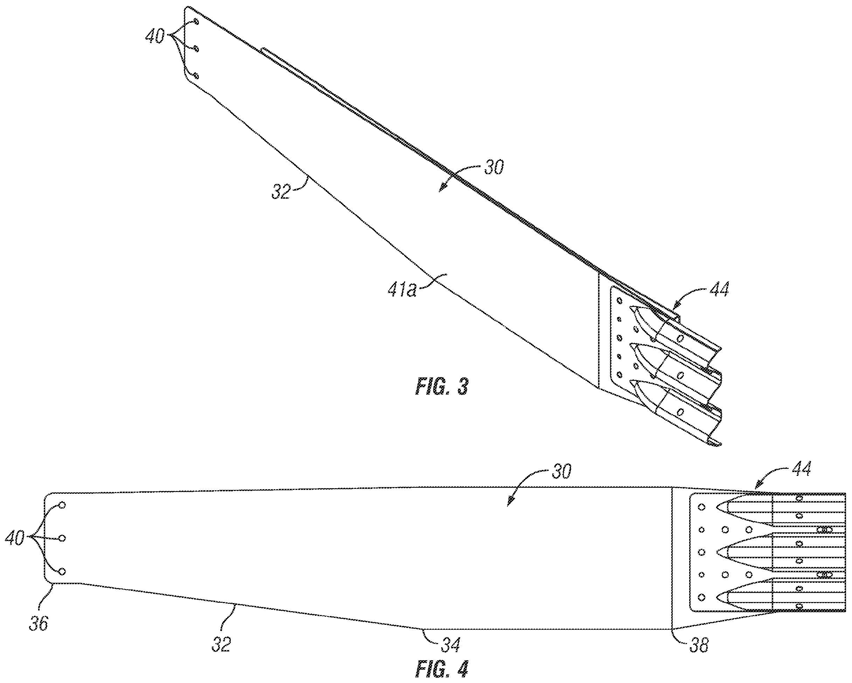

Referring now more particularly to the drawings, there is shown in Figs. 1 and 2 a vehicular crash attenuator 10, which is secured to a fixed abutment or structure 20 by means of a transition plate 30. The transition plate 30 is shown in greater detail in Figs. 3-6.

The vehicular crash attenuator 10 may be of any known type in the industry, typically constructed with a nosepiece 12 at a front end thereof, designed to absorb the first impact from an errant vehicle, and a plurality of compressible sections or stages 14 (Fig. 2). The illustrated example is the DELTA CRASH CUSHION^{®} system, sold by the applicant for the present application, TrafFix Devices, Inc., of San Clemente, California, but other available crash attenuation systems, available from competitors in the roadside safety marketplace, may also be used.

The transition plate 30 is constructed to be conformed to or compatible with the surface of the fixed structure to which it is to be attached, so that the plate lies in a flush manner on that surface when attached. Thus, in the illustrated embodiment, the transition place 30 is substantially flat in configuration, as opposed to prior art transition plates which are typically of a thrie-beam construction. The term "substantially flat" means that it is designed to be flat, and is manufactured to that design, within certain reasonable tolerances. Henceforth, and throughout the claims, the term "flat" will be used, but it is to be understood to mean "substantially flat" to allow for the tolerances typical in all manufacturing operations. The transition plate, as shown, is designed with a taper and shape to mimic the concrete barrier, in this case a barrier commonly identified in the industry as a "Jersey Barrier" to which it is adapted to be attached. However, the type of fixed structure is not important to the invention - any such structure or object having an available flat surface to which the rearward end of the plate can be attached is potentially usable with the inventive transition system.

More particularly, the plate 30 includes a taper 32 from a location 34 partially (about midway) along a length of the plate 30 and extending rearwardly to a rearward end 36 of the plate 30. Thus, the plate 30 comprises a first width at its forward end, and a second smaller width at its rearward end 36, the width of the plate narrowing gradually from the first width to the second smaller width along the taper 32.

Bolt holes 40 are disposed in the rearward end 36 of the plate 30 for securing the plate 30 to the fixed structure 20, extending through a front face 41a of the plate and a rear face 41b of the plate. Note that the taper 32 may be adapted to narrow the plate 30 so that at its rearward end 36, it is sized so that its width corresponds to the width of an available flat surface 42 on the fixed structure 20, and the rearward end 36 of the plate 30 may thus be readily secured to the available flat surface 42 using bolts disposed through the bolt holes 40. Thus, the angle of the taper is adaptable to the length of the transition plate and the size (length, width, and/or area) of the available flat surface 42 on the structure 20, so that no matter the type of structure to which the transition is to be secured, that securement should be easily attained.

Transition mount 44 is adapted to secure the rearward end of the crash attenuator 10 to the transition plate 30. Fastening of the transition mount 44 may be attained by using mechanical fasteners, but may also be by welding.

Shims 46, illustrated as being of wood, may be inserted between the plate 30 and the fixed structure 20 in locations where there is a gap between the plate 30 and the structure 20, to fixedly secure the plate to the structure between the transition mount 44 and the fasteners at the rearward end 36 of the plate.

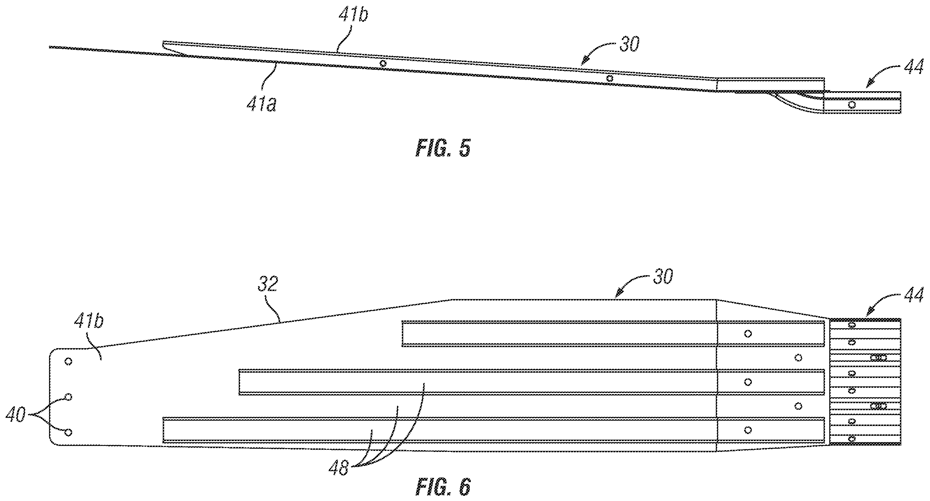

A plurality of ribs 48 may be advantageously secured to the rear face 41b of the transition plate 30 (Fig. 6) to reinforce the plate. As illustrated, the plurality of ribs are of differing lengths, in order to be adapted to the configuration and taper of the plate, and are advantageously formed using a C-channel structure, for maximizing strength of the plate and cost effectiveness.

In one exemplary embodiment, for illustrative purposes only, the plate 30 is 3/16 inch (0.4763 cm) plate, with a galvanized finish. The rearward end (second) width is 15.3 inches (38.86 cm), and the front end (first) width is 24.0 inches (60.96 cm).

The innovative transition plate of the present invention has been found to result in successful crash testing under current federal MASH standards. In particular, it has been found to minimize snagging, minimize vehicle floor board deformation, and to maximize re-direction of the impacting vehicle.

## Claims

1. A transition system adapted for securing a roadside safety system (10) to a fixed structure (20), the transition system comprising:
a transition plate (30) having a forward end (38) and a rearward end (36), as well as a front face (41a) and a rear face (41b); and **characterized by** the transition system further comprising:
a transition mount (44) comprising a member extending rearwardly from a rearward end of the roadside safety system (10) for securing the rearward end of the roadside safety system to the forward end of the transition plate (30), the transition plate comprising a flat surface (41b) configured to be conformed to a corresponding outer surface (42) on the fixed structure (20), for securing the roadside safety system to said corresponding surface (42); and
wherein the transition plate includes a taper (32) from a location (34) partially along a length of the transition plate and extending at an angle rearwardly to the rearward end of the transition plate, in a direction away from the transition mount (44).

2. The transition system as recited in claim 1, and further comprising a plurality of apertures (40) disposed through the front and rear faces (41a, 41b) of the transition plate at its rearward end, the plurality of apertures being adapted to receive mechanical fasteners for securing the transition plate to the corresponding surface (42) on the fixed structure.

3. The transition system as recited in claim 1, wherein the location (34) partially along the length of the transition plate (30) is about midway along a distance between the forward end of the plate (38) and the rearward end (36) of the plate.

4. The transition system as recited in claim 1, wherein the transition plate (30) comprises a first width at its forward end (38) and a second width at its rearward end (36), the second width being smaller than the first width.

5. The transition system as recited in claim 4, wherein the width of the transition plate narrows gradually from the first width at the location partially along the length of the transition plate to the second width at the rearward end of the transition plate because of the taper.

6. The transition system as recited in claim 5, wherein the corresponding surface (42) on the fixed structure (20) is also flat.

7. The transition system as recited in claim 1, wherein the transition mount is secured to the forward end of the plate by either mechanical fasteners or by one or more welds.

8. The transition system as recited in claim 1
and further comprising
a plurality of reinforcement ribs (48) disposed in spaced relation to one another on the rear face (41b) of the transition plate.

9. The transition system as recited in claim 8, wherein each of the plurality of reinforcement ribs is disposed along the length of the transition plate, each of the plurality of reinforcement ribs having a length.

10. The transition system as recited in claim 9, wherein each of the plurality of reinforcement ribs is comprised of a C-channel construction.

11. The transition system as recited in claim 9, wherein the lengths of at least two of the plurality of reinforcement ribs are different from one another.

## Patentansprüche

1. Übergangssystem, das so angepasst ist, dass es ein Straßenrand-Sicherheitssystem (10) an einer festen Struktur (20) befestigt, das Übergangssystem umfassend:
eine Übergangsplatte (30), die ein vorderes Ende (38) und ein hinteres Ende (36) aufweist, sowie eine vordere Seite (41a) und eine hintere Seite (41b); und **gekennzeichnet dadurch, dass** das Übergangssystem ferner umfasst:
eine Übergangsbefestigung (44), die ein Element umfasst, das sich von einem hinteren Ende des Straßenrand-Sicherheitssystems (10) nach hinten erstreckt, um das hintere Ende des Straßenrand-Sicherheitssystems an dem vorderen Ende der Übergangsplatte (30) zu befestigen, wobei die Übergangsplatte eine flache Oberfläche (41b) umfasst, die so konfiguriert ist, dass sie an eine entsprechende Außenfläche (42) der festen Struktur (20) angepasst wird, um das Straßenrand-Sicherheitssystem an der entsprechenden Oberfläche (42) zu befestigen; und
wobei die Übergangsplatte eine Verjüngung (32) von einer Stelle (34) teilweise entlang einer Länge der Übergangsplatte einschließt und sich in einem Winkel nach hinten zum hinteren Ende der Übergangsplatte erstreckt, in einer Richtung weg von der Übergangsbefestigung (44).

2. Übergangssystem nach Anspruch 1, und ferner umfassend eine Vielzahl von Durchlässen (40), die durch die vordere und hintere Seite (41a, 41b) der Übergangsplatte an ihrem hinteren Ende angeordnet sind, wobei die Vielzahl der Durchlässe so angepasst ist, dass sie mechanische Befestigungen aufnehmen kann, um die Übergangsplatte an der entsprechenden Oberfläche (42) an der festen Struktur zu befestigen.

3. Übergangssystem nach Anspruch 1, wobei die Stelle (34) teilweise entlang der Länge der Übergangsplatte (30) etwa auf halber Strecke entlang eines Abstands zwischen dem vorderen Ende der Platte (38) und dem hinteren Ende (36) der Platte liegt.

4. Übergangssystem nach Anspruch 1, wobei die Übergangsplatte (30) eine erste Breite an ihrem vorderen Ende (38) und eine zweite Breite an ihrem hinteren Ende (36) umfasst, wobei die zweite Breite schmaler ist als die erste Breite.

5. Übergangssystem nach Anspruch 4, wobei die Breite der Übergangsplatte aufgrund der Verjüngung allmählich von der ersten Breite an der Stelle teilweise entlang der Länge der Übergangsplatte zu der zweiten Breite am hinteren Ende der Übergangsplatte schmaler wird.

6. Übergangssystem nach Anspruch 5, wobei die entsprechende Oberfläche (42) an der festen Struktur (20) ebenfalls flach ist.

7. Übergangssystem nach Anspruch 1, wobei die Übergangsbefestigung an dem vorderen Ende der Platte entweder über mechanische Befestigungen oder anhand einer oder mehrerer Schweißnähte fixiert ist.

8. Übergangssystem nach Anspruch 1 und ferner umfassend eine Vielzahl von Verstärkungsrippen (48), die in räumlicher Beziehung zueinander an der hinteren Seite (41b) der Übergangsplatte angeordnet sind.

9. Übergangssystem nach Anspruch 8, wobei jede der Vielzahl von Verstärkungsrippen entlang der Länge der Übergangsplatte angeordnet ist und jede der Vielzahl von Verstärkungsrippen eine Länge aufweist.

10. Übergangssystem nach Anspruch 9, wobei jede der Vielzahl von Verstärkungsrippen aus einer C-Kanal-Konstruktion besteht.

11. Übergangssystem nach Anspruch 9, wobei die Längen von mindestens zwei der Vielzahl von Verstärkungsrippen voneinander verschieden sind.

## Revendications

1. Système de transition apte à assujettir un système de sécurité routière (10) à une structure fixe (20), le système de transition comprenant :
une plaque de transition (30) présentant une extrémité avant (38) et une extrémité arrière (36), ainsi qu'une face avant (41a) et une face arrière (41b) ; et **caractérisée en ce que** le système de transition comprend en outre :
un montage de transition (44) comprenant un élément s'étendant vers l'arrière à partir d'une extrémité arrière du système de sécurité routière (10) destiné à assujettir l'extrémité arrière du système de sécurité routière à l'extrémité avant de la plaque de transition (30), la plaque de transition comprenant une surface plate (41b) conçue pour être adaptée à une surface extérieure correspondante (42) sur la structure fixe (20), destinée à assujettir le système de sécurité routière à ladite surface correspondante (42) ; et
dans lequel la plaque de transition comprend un cône (32) à partir d'un emplacement (34) partiellement sur toute une longueur de la plaque de transition et s'étendant selon un angle vers l'arrière par rapport à l'extrémité arrière de la plaque de transition, dans une direction s'éloignant du montage de transition (44).

2. Système de transition tel que décrit dans la revendication 1, et comprenant en outre une pluralité d'ouvertures (40) disposées à travers les faces avant et arrière (41a, 41b) de la plaque de transition à son extrémité arrière, la pluralité d'ouvertures étant apte à recevoir des dispositifs de fixation mécaniques destinés à assujettir la plaque de transition à la surface correspondante (42) sur la structure fixe.

3. Système de transition tel que décrit dans la revendication 1, dans lequel l'emplacement (34) partiellement sur toute la longueur de la plaque de transition (30) est à peu près à mi-chemin le long d'une distance entre l'extrémité avant de la plaque (38) et l'extrémité arrière (36) de la plaque.

4. Système de transition tel que décrit dans la revendication 1, dans lequel la plaque de transition (30) comprend une première largeur à son extrémité avant (38) et une seconde largeur à son extrémité arrière (36), la seconde largeur étant inférieure à la première largeur.

5. Système de transition tel que décrit dans la revendication 4, dans lequel la largeur de la plaque de transition se rétrécit de manière progressive à partir de la première largeur à l'emplacement partiellement sur toute la longueur de la plaque de transition à la seconde largeur à l'extrémité arrière de la plaque de transition en raison de la conicité.

6. Système de transition tel que décrit dans la revendication 5, dans lequel la surface correspondante (42) sur la structure fixe (20) est également plate.

7. Système de transition tel que décrit dans la revendication 1, dans lequel le montage de transition est assujetti à l'extrémité avant de la plaque soit par des dispositifs de fixation mécaniques, soit par une ou plusieurs soudures.

8. Système de transition tel que décrit dans la revendication 1 et comprenant en outre une pluralité de nervures de renforcement (48) disposées à distance les unes des autres sur la face arrière (41b) de la plaque de transition.

9. Système de transition tel que décrit dans la revendication 8, dans lequel chaque nervure de la pluralité de nervures de renforcement est disposée sur toute la longueur de la plaque de transition, chaque nervure de la pluralité de nervures de renforcement présentant une longueur.

10. Système de transition tel que décrit dans la revendication 9, dans lequel chaque nervure de la pluralité de nervures de renforcement est constituée d'une construction en profilé en C.

11. Système de transition tel que décrit dans la revendication 9, dans lequel les longueurs d'au moins deux de la pluralité de nervures de renforcement sont différentes les unes des autres.
